Europäisches Patentamt

European Patent Office

Office européen des brevets

(19)

(11) Veröffentlichungsnummer : **0 033 381**
**B1**

(12) # EUROPÄISCHE PATENTSCHRIFT

(45) Veröffentlichungstag der Patentschrift :
21.11.85

(21) Anmeldenummer : 80107849.4

(22) Anmeldetag : 12.12.80

(51) Int. Cl.⁴ : **G 01 T  1/18, G 01 T  1/36**

(54) Verfahren zum Nachweis von alpha- und/oder beta-Teilchen.

(30) Priorität : 02.02.80 DE 3003909

(43) Veröffentlichungstag der Anmeldung :
12.08.81 Patentblatt 81/32

(45) Bekanntmachung des Hinweises auf die Patenterteilung : 21.11.85 Patentblatt 85/47

(84) Benannte Vertragsstaaten :
BE CH FR GB LI NL

(56) Entgegenhaltungen :
DE-A- 2 500 510
FR-A- 2 251 911
US-A- 2 716 523
THE PROCEEDINGS OF THE INSTITUTION OF ELEC-
TRICAL ENGINEERS, Band 98, Teil II, Nr. 62, April
1951, Seiten 209-230, J. SHARPE et al. : " Symposium
of papers on radiation monitoring apparatus ;
Session II. Nuclear particle and radiation detectors ;
Part 2 : Counters and counting systems "
NUCLEAR INSTRUMENTS AND METHODS, Band 96,
Nr. 3, 15. Oktober 1971, Seiten 397-403, Amsterdam,
NL., T.J. HARRIS et al. : " Pulse shape discrimination
in proportional counters - Experimental results with
an optimised electronic system"

(73) Patentinhaber : Kernforschungszentrum Karlsruhe
GmbH
Weberstrasse 5
D-7500 Karlsruhe 1 (DE)

(72) Erfinder : Kiefer, Prof. Dr. Dipl.-Phys.
Max-Planck-Strasse 7
D-7514 Eggenstein-Leo 2 (DE)
Erfinder : Röber, Hans-Gerd
Dornröschenweg 24
D-7500 Karlsruhe (DE)

## Beschreibung

Die Erfindung betrifft ein Verfahren zum Nachweis von α- und/oder β-Teilchen beliebiger Energie mit einem Ionisationsdetektor.

Ein vergleichbares Verfahren ist aus der US-A-2 716 523 bekannt. Bei ihm werden jedoch mit einer einzigen Detektoreinrichtung nur α- und β-Teilchen unterscheidbar gemessen, deren Energien sehr stark voneinander abweichen. Die Amplituden der entsprechenden Impulse unterscheiden sich ebenfalls stark.

Für die Messung von α- und β-Teilchen in der Praxis eingesetzte Detektoreinrichtungen, wie sie beispielsweise in der DE-A-25 00 510 beschrieben ist, benutzen neben Festkörper-detektoren auch Proportionalzählrohre, die Impulse liefern, deren Höhe proportional der abgegebenen Energie ist. Die Trennung zwischen α- und β-Strahlung erfolgt deshalb in bisher üblicher Weise über eine Energieanalyse, z. B. dadurch, daß bei niederer Arbeitsspannung nur α-Impulse die Zählschwelle überschreiten, bei höherer Arbeitsspannung α- und β-Impulse gemessen werden. Durch 2 Energiekanäle können auch α- und β-Strahlung gleichzeitig getrennt erfaßt werden. Dasselbe läßt sich auch mechanisch mit einem Doppelzähler erreichen, wenn durch eine Trennungsfolie dafür gesorgt wird, daß β-Strahlung nicht in den zweiten Zähler gelangt.

Diese Verfahren funktionieren aber nur genau, wenn vorausgesetzt werden darf, daß alle α-Teilchen mehr Energie abgeben als die β-Teilchen, bzw. bei « mechanischer » Trennung, wenn die Reichweite aller β-Teilchen größer ist als die der α-Teilchen. Beide Voraussetzungen sind aber nur teilweise erfüllt und führen deshalb zu Fehlmessungen.

So geben z. B. in Großflächenzählern β-Teilchen je nach Zählgas bis 200 keV Energie ab, α-Teilchen, die durch Absorption und Selbstabsorption vorher schon einen Großteil ihrer Energie verloren haben, geben genausoviel Energie ab und werden deshalb über eine bisher übliche Energieanalyse nicht mehr von β-Teilchen unterschieden. D. h. in der Praxis, ein reiner α-Strahler täuscht einen zusätzlichen β-Strahler vor und, je nach Arbeitsspannung, auch umgekehrt.

Bei der « mechanischen » Trennung geht je nach angelegter Arbeitsspannung der niederenergetische β-Anteil, der wegen der kontinuierlichen β-Spektren immer vorhanden ist, verloren oder wird als α-Strahlung registriert. Auch bei Differenzmessungen können bei gleicher Energieabgabe α- von β-Teilchen nicht unterschieden werden.

Diese grundsätzlichen Fehler wirken sich bei Messungen mit Proportionalzählrohren (oder auch entsprechender Feststoff- oder Flüssigdetektoren), stärker bei großen Zählrohren, diffusem Strahleneinfall und bestimmten Zählgasmischungen, aus.

Ausgehend von der Erkenntnis, daß bei bisher üblichen Detektoreinrichtungen — und insbesondere bei Proportionalzählrohren — α-Teilchen mit einem Energieverlust, den sie vor Eintritt in die Detektoreinrichtung z. B. bereits innerhalb der Strahlenquelle erlitten haben, nicht von β-Teilchen (Strahlung) gleicher Energie unterscheidbar waren und als β-Teilchen oder überhaupt nicht nachgewiesen werden, besteht die Aufgabe der Erfindung darin, eine Detektoreinrichtung so auszubilden, daß α- und/oder β-Teilchen beliebiger Energie nachgewiesen werden können.

Die Lösung dieser Aufgabe ist in dem kennzeichnenden Merkmal des Anspruches 1 beschrieben. Die Merkmale der übrigen Ansprüche beziehen sich auf eine Detektoranordnung zur Durchführung des erfindungsgemäßen Verfahrens.

Bei der Erfindung wird demnach in besonders vorteilhafter Weise zur Trennung von α- und β-Strahlen nicht die abgegebene Energie, sondern die Ionisierungsdichte ausgenutzt, die bei α- und β-Strahlung in jedem Fall unterschiedlich ist. Die Ionisierungsdichte wirkt sich in der Impulsform aus, so daß z. B. über das Pulseshape-Verfahren eine wirkungsvolle Trennung von α- und β-Strahlung möglich wird.

Der Vorteil dieser Trennung besteht darin, daß die Messungen richtig sind, und daß bei gleichzeitiger Messung von α- und β-Teilchen kürzere Meßzeiten oder eine höhere statistische Genauigkeit erzielt werden. Durch den Einsatz von Kontrollstrahlern während der Messung von α- oder β-Strahlung kann die Zuverlässigkeit der Messungen noch erhöht werden. Verbunden mit dieser Art der α/β-Diskriminierung ist außerdem ein höheres zeitliches Auflösungsvermögen.

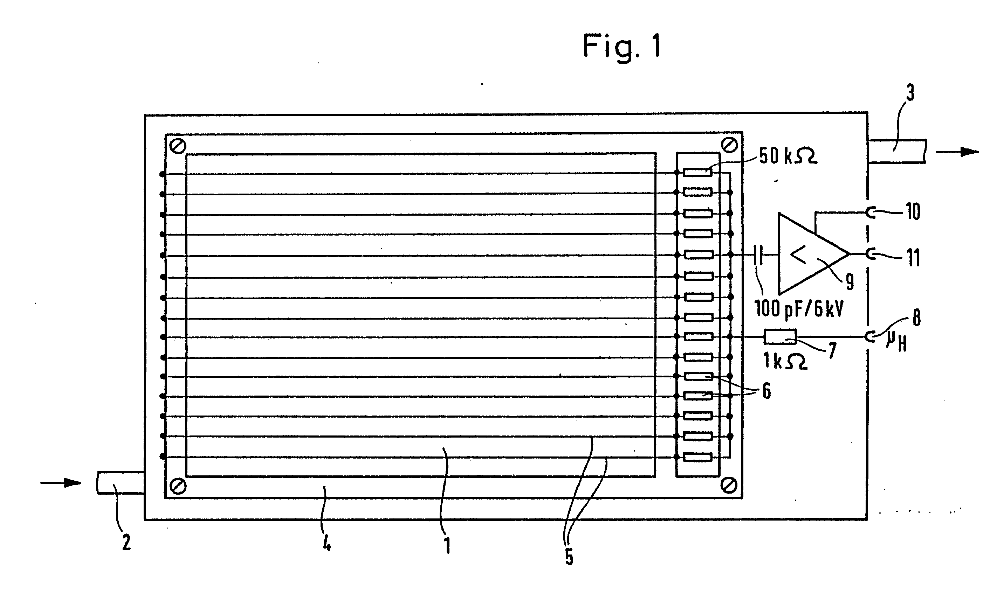

Die Erfindung wird im folgenden anhand eines Ausführungsbeispiels mittels der Figuren 1 bis 3 näher erläutert.

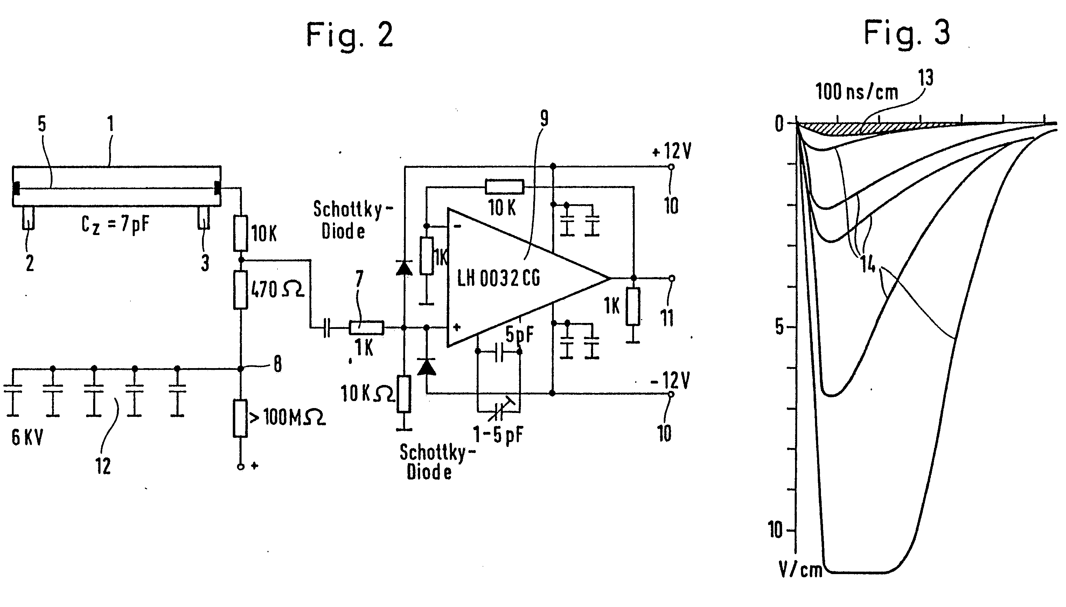

Die Figur 1 zeigt eine Aufsicht auf einen schematisch dargestellten Großflächenzähler 1 mit Zählgaszu- und -ablauf 2, 3, in dem ein Isolierrahmen 4 mit einzeln parallel zueinander aufgespannten Zähldrähten 5 angeordnet ist. Diese Zähldrähte 5 sind über Sammelarbeitswiderstände 6 an einen gemeinsamen Koppelarbeitswiderstand 7 im Verhältnis von z. B. 50 : 1 (50 kΩ : 1 kΩ angeschlossen, der wiederum mit einem Hochspannungsanschluß 8 verbunden ist. Parallel zum Koppelarbeitswiderstand 7 liegt eine Verstärkerschaltung 9, an der die Stromversorgung 10 anliegt und die den für die Auswertung geeigneten Ausgangsimpuls 11 abgibt (s. auch Figur 2).

Der Koppelarbeitswiderstand 7 und die Verstärkerschaltung 9 sind vorteilhafterweise im Detektorelement 1 integriert oder unmittelbar daran angabaut, um schädliche Kapazitäten zu vermeiden, die die Anstiegszeit des Ausgangsimpulses 11 beeinflussen können. Die Kapazität der Einzeldrähte 5 gegen das Massepotential muß möglichst klein gehalten werden (vorzugsweise wesentlich unter 20 pF), um ebenfalls die Anstiegszeiten der α-Teilchenimpulse nicht abzuflachen. Es können auch mehrere der Zähldrähte, sofern diese o. g. Bedingung eingehalten wird, zusammengefaßt werden.

In Figur 2 ist nochmals die Detektoreinrichtung 1 im Querschnitt mit einem Zähldraht 5, die Schaltungsanordnung 9 mit dem Koppelarbeitswiderstand 7 und eine Kondensatorbatterie 12 dargestellt. Sie führt die Hochspannung dem Anschluß 8 beim Koppelarbeitswiderstand 7 der Detektoreinrichtung 1 mit einem verlangsamten Anstieg zum Schutze der Verstärkerschaltung 9 zu. Die Verstärkerschaltung 9 verarbeitet Impulse mit einer Anstiegszeit kleiner 50 ns. Der Ausgangsimpuls 11 wird in nicht näher dargestellten Auswerteeinrichtungen (Diskriminierung nach Anstiegszeit und/oder Amplitude, Zählkanälen für α- und β-Teilchen, Digitalzählern) verarbeitet.

Die Figur 3 zeigt Ausgangsimpulse 11 der Schaltung nach Figur 2, aufgetragen als Amplituden-Zeitfunktionen (V cm$^{-1}$ gegen 100 ns cm$^{-1}$). Die β-Teilchen liegen in der schraffiert eingezeichneten Fläche, deren Einhüllende 13 einen scharf begrenzten Bereich von ca. 1 bis 300 mV umgibt. Die übrigen Kurven 14 zeigen das Amplitudenspektrum verschiedener α-Teilchen mit verschiedenen Energieverlusten vor Eintritt in die Detektoreinrichtung 1. Die Anstiegszeiten (< 50 ns) heben sich deutlich von denen der β-Teilchen (100 ns) ab.

## Patentansprüche

1. Verfahren zum Nachweis von α- und/oder β-Teilchen beliebiger Energie mit einem Ionisationsdetektor, dadurch gekennzeichnet, daß die für α- und β-Teilchen unterschiedliche Anstiegszeit der Ionisationsdichte im Detektor zur Diskriminierung zwischen α- und β-Teilchen gleicher Energie ausgenutzt wird.

2. Detektoranordnung zur Ausführung des Verfahrens nach Anspruch 1 mit einem Großflächenzähler (1), der mehrere Zähldrähte (5) aufweist, dadurch gekennzeichnet, daß diese Zähldrähte (5) jeweils über zugeordnete Sammelarbeitswiderstände (6) an einem gemeinsamen Koppelarbeitswiderstand (7) angeschlossen sind.

3. Detektoranordnung nach Anspruch 2, dadurch gekennzeichnet, daß eine Verstärkerschaltung (9) parallel zum Koppelarbeitswiderstand (7) derart geschaltet ist, daß die Zähldrahtstand (7) derart geschaltet ist, daß die Zähldraht-und Schaltkapazität für jeden Zähldraht (5) kleiner 20 pF ist.

## Claims

1. Process for detecting alpha and/or beta particles of any energy with an ionization detector wherein the rise times of the ionization density in the detector which are different for alpha and beta particles are used as a means of discriminating between alpha and beta particles having the same energy.

2. Detector device for implementing the process as defined in claim 1 comprising a large area counter (1) with several counting wires (5) wherein these counting wires (5) are connected to a common coupled load resistor (7) via bus load resistors (6) assigned to each of them.

3. Detector device as defined in claim 2 wherein an amplification means (9) parallel to the coupled load resistor (7) is connected such that the counting wire and switching capacitance for each counting wire(5) is smaller than 20 pF.

## Revendications

1. Procédé pour la détection de particules alpha et/ou de particules bêta d'une énergie quelconque avec un détecteur d'ionisation, procédé caractérisé en ce que le temps d'accroissement, différent pour les particules α et pour les particules β, de la densité d'ionisation dans le détecteur, est utilisé pour la discrimination entre des particules α et des particules β de même énergie.

2. Dispositif détecteur pour la mise en œuvre du procédé selon la revendication 1, avec un compteur de grande surface (1) comportant plusieurs fils de comptage (5), dispositif caractérisé en ce que les fils de comptage (5) sont respectivement raccordés, par l'intermédiaire de résistances de charge collectrices (6) qui leur sont associées, à une résistance commune de charge (7) de couplage.

3. Dispositif détecteur selon la revendication 2, caractérisé en ce qu'un circuit d'amplification (9) est branché en parallèle sur la résistance de charge (7) de couplage de façon que la capacité du fil de comptage et la capacité de branchement soient inférieures à 20 pF pour chaque fil de comptage (5).

# Fig. 1

0 033 381

# Fig. 2

$C_z = 7\,pF$

5  1

2  3

10 K

470 Ω

8

6 KV

12

> 100 MΩ

+

7

Schottky-Diode

1K

1K

10 KΩ

Schottky-Diode

10 K

LH 0032 CG

9

5 pF

1 - 5 pF

1K

+12 V

10

11

-12 V

10

# Fig. 3

100 ns/cm  13

0

5

10

V/cm

14

0 033 381